# EUROPEAN PATENT APPLICATION

(11) **EP 4 510 211 A1**
(43) Date of publication of application: **19.02.2025**
(21) Application number: 23818766.0
(22) Date of filing: 01.03.2023
(51) Int. Cl.: H01M 4/13, H01M 10/0587, H01M 10/0525

(54) **ELECTRODE SHEET STRUCTURE AND PREPARATION METHOD THEREFOR, BATTERY CELL, AND SECONDARY BATTERY**

(30) Priority: 06.06.2022 CN 202210630933
(71) Applicant: Contemporary Amperex Technology Co., Limited, Jiaocheng District Ningde Fujian 352100 (CN)
(72) Inventor: WANG, Yalong, Ningde, Fujian 352100 (CN); LU, Lei, Ningde, Fujian 352100 (CN); WANG, Zheng, Ningde, Fujian 352100 (CN); DENG, Kaiming, Ningde, Fujian 352100 (CN); YU, Linzhen, Ningde, Fujian 352100 (CN); HU, Changyuan, Ningde, Fujian 352100 (CN); LI, Shisong, Ningde, Fujian 352100 (CN); DAI, Shunhao, Ningde, Fujian 352100 (CN)
(74) Representative: Herrmann, Uwe
(86) International application number: PCT/CN2023/079069
(87) International publication number: WO 2023/236598

(57) **Abstract**

This application relates to an electrode plate structure. With a ratio CB₁ of a surface loading of a second cathode material layer to a surface loading of a first anode material layer controlled to be 1 :(1.01-1.3) and a ratio CB₂ of a surface loading of a first cathode material layer to a surface loading of a second anode material layer controlled to be 1:(1.03-1.4), the surface loadings of the first anode material layer and second anode material layer are slightly higher than the surface loadings of the corresponding second cathode material layer and first cathode material layer, so that during cycling, especially at a high rate, the first anode material layer and the second anode material layer can provide sufficient lithiation capacity, avoiding lithium precipitation on the anode. This application also implements a differential design for the material layers on two sides of the electrode plates, so that CB₁ is different from CB₂, avoiding energy density loss of a jelly roll caused by excessively uniform CB values on two sides of the electrode plates, thereby increasing energy density of the jelly roll. This application further relates to a preparation method of electrode plate structure, which achieves differentiation between two sides of the electrode plates, preventing assembly errors.

## Description

This application claims priority to Chinese Patent Application No. 202210630933.3, filed on June 6, 2022.

### TECHNICAL FIELD

The present invention relates to the field of lithium-ion batteries, and specifically, to an electrode plate structure, a preparation method thereof, a battery cell, and a secondary battery.

### BACKGROUND

Due to characteristics such as low costs, long service life, and good safety, lithium-ion batteries have become the most popular energy storage system, and are currently widely used in battery electric vehicles, hybrid electric vehicles, smart grids, and other fields. A lithium-ion battery cell is mainly prepared through winding, and after winding, it is hot-pressed into a wound jelly roll. However, the current wound jelly rolls have the risk of lithium precipitation on the anode during cycling, especially at a high rate, which causes the separator of the battery to be pierced, posing safety accidents. To avoid lithium precipitation on the anode, researchers have proposed a series of improvement measures for the jelly rolls. These measures avoid lithium precipitation on the anode to some extent, but seriously reduce the energy density of the jelly rolls.

Therefore, there is an urgent need to develop an electrode plate structure, which can avoid lithium precipitation on the anode and increase the energy density of the jelly rolls.

### SUMMARY

In view of the problems in the background, this application provides an electrode plate structure, which can avoid lithium precipitation on an anode and increase energy density of jelly rolls.

A first aspect of this application provides an electrode plate structure including a cathode plate and an anode plate, the cathode plate and the anode plate being wound to form part of a jelly roll; where
the cathode plate includes: a first cathode material layer closer to a central position of the jelly roll; and a second cathode material layer farther away from the central position of the jelly roll; and
the anode plate includes: a first anode material layer closer to the central position of the jelly roll; and a second anode material layer farther away from the central position of the jelly roll;
where the second cathode material layer and the first anode material layer are disposed opposite each other, and the first cathode material layer and the first anode material layer are disposed opposite each other;
a ratio CB₁ of a surface loading of the second cathode material layer to a surface loading of the first anode material layer is 1:(1.01-1.3); and
a ratio CB₂ of a surface loading of the first cathode material layer to a surface loading of the second anode material layer is 1:(1.03-1.4), where CB₂ is different from CB₁.

A second aspect of this application provides a preparation method of electrode plate structure, where
a first cathode material layer and a second cathode material layer have different preparation methods; and/or
a first anode material layer and a second anode material layer have different preparation methods.

A third aspect of this application provides a battery cell including the electrode plate structure according to the first aspect of this application.

A fourth aspect of this application provides a secondary battery including the battery cell according to the third aspect of this application.

Compared with the prior art, this application has at least the following beneficial effects:
This application provides an electrode plate structure including a cathode plate and an anode plate. With a ratio CB₁ of a surface loading of a second cathode material layer to a surface loading of a first anode material layer controlled to be 1:(1.01-1.3) and a ratio CB₂ of a surface loading of a first cathode material layer to a surface loading of a second anode material layer controlled to be 1:(1.03-1.4), the surface loadings of the first anode material layer and second anode material layer are slightly higher than the surface loadings of the corresponding second cathode material layer and first cathode material layer, so that during cycling, especially at a high rate, the first anode material layer and the second anode material layer can provide sufficient lithiation capacity, avoiding lithium precipitation on the anode. In addition, the inventors have implemented a differential design for the material layers on two sides of the electrode plates, so that CB₁ is different from CB₂, avoiding energy density loss of the jelly roll caused by excessively uniform CB values on two sides of the electrode plates, thereby increasing the energy density of the jelly roll.

In addition, this application provides a preparation method of electrode plate structure, where a first cathode material layer and a second cathode material layer have different preparation methods; and/or a first anode material layer and a second anode material layer have different preparation methods. After the manufacturing process of the electrode plates, the surface loadings of the material layers on two sides of the electrode plates have only minimal difference, making it difficult to distinguish between them. Therefore, a significant difference is needed to help distinguish between different corresponding sides during winding. To address this problem, this application uses different preparation methods to achieve differences between two sides of the electrode plates. Before winding, the two sides of the electrode plates can be clearly distinguished through simple CCD (charge-coupled device) observation or laser thickness measurement, preventing assembly errors.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and persons of ordinary skill in the art may still derive other drawings from these accompanying drawings without creative efforts.

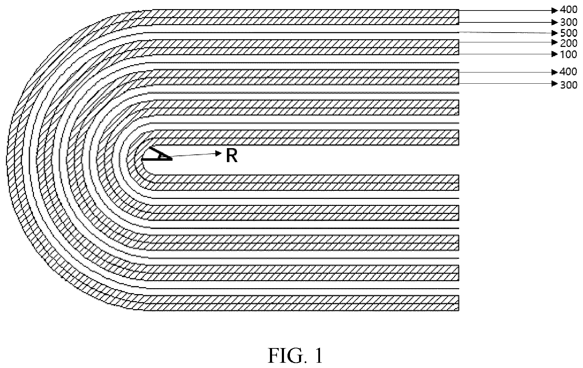

FIG. 1 is a schematic diagram of a wound jelly roll including an electrode plate structure of this application.

Description of reference signs:
100. first cathode material layer, 200. second cathode material layer, 300. first anode material layer, 400. second anode material layer, 500. separator, and R. innermost corner angle of jelly roll.

### DESCRIPTION OF EMBODIMENTS

To make the objectives, technical solutions, and beneficial technical effects of this application clearer, the following describes this application in detail with reference to specific embodiments. It should be understood that the embodiments described in this specification are merely intended to interpret this application, but not intended to limit this application.

For simplicity, only some numerical ranges are expressly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual value between endpoints of a range is included in the range. Therefore, each point or individual value may be used as its own lower limit or upper limit to be combined with any other point or individual value or combined with any other lower limit or upper limit to form a range not expressly recorded.

In the description of this specification, it should be noted that "more than" and "less than" are inclusive of the present number and that "more" in "one or more" means more than two (including two), unless otherwise stated.

The foregoing summary of this application is not intended to describe each of the disclosed embodiments or implementations of this application. The following description illustrates exemplary embodiments in more detail by using examples. Throughout this application, guidance is provided by using a series of embodiments, and these embodiments may be used in various combinations. In the examples, enumeration is merely representative and should not be interpreted as exhaustive.

Due to characteristics such as low costs, long service life, and good safety, lithium-ion batteries have become the most popular energy storage system, and are currently widely used in battery electric vehicles, hybrid electric vehicles, smart grids, and other fields. A lithium-ion battery cell is mainly prepared through winding, and after winding, it is hot-pressed into a wound jelly roll. There are corners on two sides of the jelly roll. During winding of electrode plates, the increasing thickness may lead to a situation where a surface loading of a cathode is greater than a surface loading of an anode at the corners. Consequently, during cycling, especially at a high rate, lithium precipitation occurs on the anode. Once lithium dendrites form, they can pierce a separator of the battery, and in turn the cathode and the anode are connected, resulting in short circuit of the battery. This leads to a rapid temperature rise inside the battery cell, causing an electrolyte to reach its ignition point or flash point and the battery cell to burn and explode, posing safety accidents.

To avoid lithium precipitation on the anode, the researchers have designed a capacity ratio CB of cathode and anode active materials, so that an anode capacity is higher than a cathode capacity, for example, by 40%. This design can ensure that the anode at the corners of the jelly roll can provide sufficient lithiation capacity, avoiding lithium precipitation on the anode. However, this design causes capacity waste on a side of the anode plate with a smaller curvature radius, reducing energy density of the jelly roll.

To avoid lithium precipitation on the anode and increase the energy density of the jelly roll, the inventors, through in-depth research, have designed an electrode plate structure including a cathode plate and an anode plate. With a ratio CB₁ of a surface loading of a second cathode material layer to a surface loading of a first anode material layer controlled to be 1:(1.01-1.3) and a ratio CB₂ of a surface loading of a first cathode material layer to a surface loading of a second anode material layer controlled to be 1:(1.03-1.4), the surface loadings of the first anode material layer and second anode material layer are slightly higher than the surface loadings of the corresponding second cathode material layer and first cathode material layer, so that during cycling, especially at a high rate, the first anode material layer and the second anode material layer can provide sufficient lithiation capacity, avoiding lithium precipitation on the anode. In addition, the inventors have implemented a differential design for the material layers on two sides of the electrode plates, so that CB₁ is different from CB₂, avoiding energy density loss of the jelly roll caused by excessively uniform CB values on two sides of the electrode plates, thereby increasing the energy density of the jelly roll.

Specifically, a first aspect of this application provides an electrode plate structure including a cathode plate and an anode plate, the cathode plate and the anode plate being wound to form part of a jelly roll; where
the cathode plate includes: a first cathode material layer closer to a central position of the jelly roll; and a second cathode material layer farther away from the central position of the jelly roll; and
the anode plate includes: a first anode material layer closer to the central position of the jelly roll; and a second anode material layer farther away from the central position of the jelly roll;
where the second cathode material layer and the first anode material layer are disposed opposite each other, and the first cathode material layer and the first anode material layer are disposed opposite each other;
a ratio CB₁ of a surface loading of the second cathode material layer to a surface loading of the first anode material layer is 1:(1.01-1.3); and
a ratio CB₂ of a surface loading of the first cathode material layer to a surface loading of the second anode material layer is 1:(1.03-1.4), where CB₂ is different from CB₁.

In this application, "surface loading" refers to a mass of an active material loaded on one surface of a current collector per unit area. "The surface loading of the first cathode material layer" refers to a mass of a cathode active material loaded on one surface of a cathode current collector closer to the central position of the jelly roll per unit area. "The surface loading of the second cathode material layer" refers to a mass of a cathode active material loaded on one surface of the cathode current collector farther away from the central position of the jelly roll per unit area. "The surface loading of the first anode material layer" refers to a mass of an anode active material loaded on one surface of an anode current collector closer to the central position of the jelly roll per unit area. "The surface loading of the second anode material layer" refers to a mass of an anode active material loaded on one surface of the anode current collector farther away from the central position of the jelly roll per unit area.

In some embodiments of this application, the cathode plate includes a cathode current collector and cathode material layers disposed on two surfaces of the cathode current collector, namely, the first cathode material layer and the second cathode material layer. The jelly roll of this application is a wound jelly roll. The first cathode material layer is closer to the central position of the jelly roll, and the second cathode material layer is farther away from the central position of the jelly roll.

In some embodiments of this application, the first cathode material layer and the second cathode material layer both include a cathode active material. The cathode active material is not limited to a particular type in this application, and all cathode active materials commonly used in the field can be used in this application. The first cathode material layer and the second cathode material layer may further include a conductive agent and a binder, where the conductive agent and the binder are not limited to specific types and contents, and can be selected based on actual needs.

In some embodiments of this application, the second cathode material layer may be prepared by using a quasi-dry method. The quasi-dry method is described in detail below. The second cathode material layer may include a mixture of a fibrillizable binder and a soluble highly polar binder.

Preferably, the fibrillizable binder may be one or more of polytetrafluoroethylene, polyethylene, polypropylene, and polyacrylonitrile, and preferably polytetrafluoroethylene. Preferably, the soluble highly polar binder may be polyvinylidene fluoride. Preferably, a mass ratio of the fibrillizable binder to the soluble highly polar binder may be 1:(1-10), for example, 1:1, 1:2, 1:3, 1:4, 1:5, 1:6, 1:7, 1:8, 1:9, or 1:10, and preferably 1:(3-7).

The inventors have found through extensive experiments that when the fibrillizable binder is used alone, the material is not self-adhesive, making it difficult to form a complete film; and when the soluble highly polar binder is used alone, the resulting film has very strong adhesion but insufficient strength and easily sticks to a roller, resulting in high difficulty in a manufacturing process. Therefore, this application uses a mixture of the fibrillizable binder and the soluble highly polar binder to prepare the second cathode material layer, which ensures that the material is self-adhesive to form a complete film with sufficient strength, and also prevents the material from sticking to the roller, making the manufacturing process simple.

In some embodiments of this application, the anode plate includes an anode current collector and anode material layers disposed on two surfaces of the anode current collector, namely, the first anode material layer and the second anode material layer. The jelly roll of this application is a wound jelly roll. The first anode material layer is closer to the central position of the jelly roll, and the second anode material layer is farther away from the central position of the jelly roll. The second cathode material layer corresponds to the first anode material layer, and the first cathode material layer corresponds to the second anode material layer.

In some embodiments of this application, the first anode material layer and the second anode material layer both include an anode active material. The anode active material is not limited to a particular type in this application, and all anode active materials commonly used in the field can be used in this application. The first anode material layer and the second anode material layer may further include a conductive agent and a binder, where the conductive agent and the binder are not limited to specific types and contents, and can be selected based on actual needs.

In some embodiments of this application, the second anode material layer may be prepared by using a quasi-dry method. The quasi-dry method is described in detail below. The second anode material layer includes a mixture of a fibrillizable binder and a self-adhesive binder.

Preferably, the fibrillizable binder may be one or more of polytetrafluoroethylene, polyethylene, polypropylene, and polyacrylonitrile, and preferably polytetrafluoroethylene. Preferably, the self-adhesive binder is a high-strength self-adhesive binder. Preferably, the self-adhesive binder may be one or more of polyacrylic resin, polyacrylic acid-acrylonitrile copolymer, polyacrylic acid-acrylate copolymer, and ethylene-propylene rubber-butadiene copolymer. Preferably, a viscosity of the self-adhesive binder may be 50000 Pa.s-200000 Pa.s. Preferably, a mass ratio of the fibrillizable binder to the self-adhesive binder may be 1:(1-20), for example, 1:1, 1:2, 1:3, 1:4, 1:5, 1:6, 1:7, 1:8, 1:9, 1:10, 1:11, 1:12, 1:13, 1:14, 1:15, 1:16, 1:17, 1:18, 1:19, or 1:20, and preferably 1:(5-18).

The inventors have found through extensive experiments that when the fibrillizable binder is used alone, the material is not self-adhesive, making it difficult to form a complete film; and when the self-adhesive binder is used alone, the resulting film has very strong adhesion but insufficient strength and easily sticks to a roller, resulting in high difficulty in a manufacturing process. Therefore, this application uses a mixture of the fibrillizable binder and the self-adhesive binder to prepare the second anode material layer, which ensures that the material is self-adhesive to form a complete film with sufficient strength, and also prevents the material from sticking to the roller, making the manufacturing process simple.

In some embodiments of this application, the ratio CB₁ of the surface loading of the second cathode material layer to the surface loading of the first anode material layer may be 1:1.01, 1:1.02, 1:1.03, 1:1.04, 1:1.05, 1:1.06, 1:1.07, 1:1.08, 1:1.09, 1:1.1, 1:1.11, 1:1.12, 1:1.13, 1:1.14, 1:1.15, 1:1.16, 1:1.17, 1:1.18, 1:1.19, 1:1.2, 1:1.21, 1:1.22, 1:1.23, 1:1.24, 1:1.25, 1:1.26, 1:1.27, 1:1.28, 1:1.29, or 1:1.3, preferably 1:(1.03-1.2), and more preferably 1:(1.03-1.07). When CB₁ is excessively large, the anode material layer cannot provide sufficient lithiation capacity, which may lead to lithium precipitation on the anode, posing safety accidents. When CB₁ is excessively small, it causes capacity waste of the anode material layer, reducing the energy density of the jelly roll.

In some embodiments of this application, the ratio CB₂ of the surface loading of the first cathode material layer to the surface loading of the second anode material layer may be 1:1.05, 1:1.06, 1:1.07, 1:1.08, 1:1.09, 1:1.1, 1:1.11, 1:1.12, 1:1.13, 1:1.14, 1:1.15, 1:1.16, 1:1.17, 1:1.18, 1:1.19, 1:1.2, 1:1.21, 1:1.22, 1:1.23, 1:1.24, 1:1.25, 1:1.26, 1:1.27, 1:1.28, 1:1.29, or 1:1.3, preferably 1:(1.05-1.3), and more preferably 1:(1.06-1. 1). When CB₂ is excessively large, the anode material layer cannot provide sufficient lithiation capacity, which may lead to lithium precipitation on the anode, posing safety accidents. When CB₂ is excessively small, it causes capacity waste of the anode material layer, reducing the energy density of the jelly roll.

In some embodiments of this application, CB₁ may be 1:(1.03-1.2), and CB₂ may be 1:(1.05-1.3). Preferably, CB₁ may be 1:(1.03-1.07), and CB₂ may be 1:(1.06-1.1). Within the ranges of CB₁ and CB₂ in this application, lithium precipitation does not occur on the anode plate of the jelly roll, even during cycling at a high rate. In addition, the differential design of CB₁ and CB₂ in this application avoids energy density loss of the jelly roll caused by excessively uniform CB values on two sides of the electrode plates, thereby increasing the energy density of the jelly roll.

In some embodiments of this application, CB₁ is preferably greater than CB₂. This design not only can avoid lithium precipitation on the anode but also can prevent capacity waste on a side of the anode plate with a smaller curvature radius, thereby increasing the energy density of the jelly roll.

In some embodiments of this application, a difference between CB₁ and CB₂ may be 0.02-0.1, and preferably 0.02-0.05.

The electrode plate structure of this application is shown in FIG. 1. FIG. 1 shows an innermost corner R of the jelly roll, where the corner R is related to the values of CB₁ and CB₂. For example, when an angle range of the innermost corner R of the jelly roll is 5°-45°, CB₁ may be 1:(1.06-1.3), and preferably 1:(1.06-1.2); and CB₂ may be 1:(1.08-1.4), and preferably 1:(1.08-1.3). For example, when the angle range of the innermost corner R of the jelly roll is 45°-90°, CB₁ may be 1:(1.01-1.06), and preferably 1:(1.03-1.04); and CB₂ may be 1:(1.03-1.08), and preferably 1:(1.06-1.07).

In some embodiments of this application, both CB₁ and CB₂ increase with the increase of the innermost corner R of the jelly roll.

This application reasonably designs the value ranges of CB₁ and CB₂ based on the changes in the innermost corner R of the jelly roll, which not only avoids lithium precipitation on the anode but also more effectively prevents capacity waste on a side of the anode plate with a smaller curvature radius, thereby further increasing the energy density of the jelly roll.

In this application, the surface loading of the first cathode material layer may be lower than the surface loading of the second cathode material layer, and/or the surface loading of the first anode material layer may be lower than the surface loading of the second anode material layer.

For example, in some embodiments of this application, the surface loading of the first cathode material layer is lower than the surface loading of the second cathode material layer, and the surface loading of the first anode material layer is equal to the surface loading of the second anode material layer. In some other embodiments of this application, the surface loading of the first cathode material layer is equal to the surface loading of the second cathode material layer, and the surface loading of the first anode material layer is lower than the surface loading of the second anode material layer. This setting of the surface loadings not only can ensure that the values of CB₁ and CB₂ fall within the foregoing ranges, but also can simplify the preparation of the material layers, making the manufacturing process simple.

The surface loadings of the first cathode material layer, the second cathode material layer, the first anode material layer, and the second anode material layer are not particularly limited in this application, provided that CB₁ and CB₂ can fall within the foregoing ranges. However, to optimize the performance of the jelly roll, especially cycling performance, preferably, the surface loadings of the first cathode material layer and the second cathode material layer are both 75 mg/1000 mm²-200 mg/1000 mm², and preferably 85 mg/1000 mm²-180 mg/1000 mm². Similarly, preferably, the surface loadings of the first anode material layer and the second anode material layer are both 125 mg/1000 mm²-525 mg/1000 mm², and preferably 150 mg/1000 mm²-450 mg/1000 mm².

After the manufacturing process of the electrode plates, the surface loadings of the material layers on two sides of the electrode plates have only minimal difference, making it difficult to distinguish between them. Therefore, a significant difference is needed to help distinguish between different corresponding sides during winding.

Therefore, to address this problem, a second aspect of this application provides a preparation method of electrode plate structure, where
a first cathode material layer and a second cathode material layer have different preparation methods; and/or
a first anode material layer and a second anode material layer have different preparation methods.

This application uses different preparation methods to achieve differences between two sides of the electrode plates. Before winding, the two sides of the electrode plates can be clearly distinguished through simple CCD observation or laser thickness measurement, preventing assembly errors.

The preparation methods of the first cathode material layer, the second cathode material layer, the first anode material layer, and the second anode material layer are not particularly limited in this application, provided that differentiation between the two sides of the electrode plates can be achieved to distinguish between the two sides.

In some embodiments of this application, the preparation methods of the first cathode material layer, the second cathode material layer, the first anode material layer, and the second anode material layer may each independently be one of a dry method, a quasi-dry method, and a wet method, and preferably one of a quasi-dry method and a wet method.

In this application, when the foregoing electrode material layers are prepared by using a wet coating process, the surface loadings of the electrode material layers can be controlled by controlling distances between a die (die) and the current collectors.

In this application, when the foregoing electrode material layers are prepared by using a quasi-dry method, rolling and thinning are required, and the surface loadings of the electrode material layers can be controlled by controlling a gap between two rollers used during rolling.

In this application, CB₁ and CB₂ can be controlled by controlling the surface loadings of the electrode material layers.

In this application, the term "quasi-dry method" refers to a preparation method including: mixing an active material, a conductive agent, a binder, and a solvent to form an agglomerated material; extruding and thinning the agglomerated material to obtain a film; and laminating the film with a current collector. The active material refers to a cathode active material or an anode active material.

In some embodiments of this application, on the cathode plate and the anode plate, the material layers with a higher surface loading are prepared by using a quasi-dry method, and the material layers with a lower surface loading are prepared by using a conventional wet coating process. An angle between an edge of the material layer prepared by using the quasi-dry method and the current collector may be 60°-90°, and preferably 75°-90°. An angle between an edge of the material layer prepared by using the wet method and the current collector may be 10°-60°, and preferably 30°-45°.

For example, in some embodiments of this application, the second cathode material layer is prepared by using a quasi-dry method, and the first cathode material layer is prepared by using a wet method. When the second cathode material layer is prepared by using the quasi-dry method, a binder used is preferably a mixture of a fibrillizable binder and a soluble highly polar binder. The specific types and mass ratio of the fibrillizable binder and the soluble highly polar binder are as described above.

Specifically, preparing the second cathode material layer by using the quasi-dry method includes: dry-mixing a cathode active material, a fibrillizable binder, and a conductive agent to obtain mixed powder; adding a soluble highly polar binder solution to the mixed powder and mixing to obtain an agglomerated material; extruding and thinning the agglomerated material to obtain a film; and laminating the film with a cathode current collector. A solid content of the agglomerated material may be 65%-98%, and preferably 70%-85%.

In some other embodiments of this application, the second anode material layer is prepared by using a quasi-dry method, and the first anode material layer is prepared by using a wet method. When the second anode material layer is prepared by using the quasi-dry method, a binder used is a mixture of a fibrillizable binder and a self-adhesive binder. The specific types and mass ratio of the fibrillizable binder and the self-adhesive binder are as described above.

Specifically, preparing the second anode material layer by using the quasi-dry method includes: dry-mixing an anode active material, a fibrillizable binder, and a conductive agent to obtain mixed powder; adding a self-adhesive binder to the mixed powder, injecting a solvent to adjust a solid content, and mixing to obtain an agglomerated material; extruding and thinning the agglomerated material to obtain a film; and laminating the film with an anode current collector. A solid content of the agglomerated material may be 63%-97%, and preferably 70%-85%.

Extensive experiments and researches have shown that using the mixture of the fibrillizable binder and the soluble highly polar binder or the mixture of the fibrillizable binder and the self-adhesive binder as the binder can meet the following processes: the powder material and the binder are simultaneously fed and then extruded through a die to obtain a thick film, the thick film is thinned through rolling, edges are cut with a cutter during thinning so that the film transferred onto a surface of a current collector has high perpendicularity to the current collector, and the laminated electrode plate is then dried in an oven to obtain an electrode plate. Because the entire process is highly integrated and the solid content is much higher than that of the wet coating process, this process has significantly reduced equipment footprint and greatly reduced overall energy consumption and material costs.

A third aspect of this application provides a battery cell including the electrode plate structure according to the first aspect of this application.

Due to the use of the electrode plate structure according to the first aspect of this application, the battery cell of this application can avoid lithium precipitation on the anode and has increased energy density.

A fourth aspect of this application provides a secondary battery including the battery cell according to the third aspect of this application.

Due to the use of the electrode plate structure according to the first aspect of this application, the secondary battery of this application can avoid lithium precipitation on the anode and has increased energy density.

The present invention is further described with reference to examples. It should be understood that these examples are merely intended to illustrate the present invention but not to limit the scope of the present invention.

The cathode plates, the anode plates, and the jelly rolls in Examples 1 to 8 and Comparative Examples 1 to 3 are prepared by using the following general preparation methods.

### Preparation of cathode plate

1. Preparation of cathode plate by using conventional wet coating
   A cathode active material (lithium iron phosphate or lithium nickel cobalt manganate NCM532), polyvinylidene fluoride (PVDF), and conductive carbon black SP were dispersed in an N-methylpyrrolidone (NMP) solvent system, and the mixture was fully stirred and evenly mixed, and then applied onto Al foil through extrusion coating, followed by drying, cold pressing, and cutting, to obtain a cathode plate.
2. Preparation of cathode plate by using quasi-dry method combined with conventional wet coating

First, dry powder was prepared, specifically including: a cathode active material (lithium iron phosphate or lithium nickel cobalt manganate NCM532), a fibrillizable binder polytetrafluoroethylene (PTFE), and conductive carbon black SP were dry-mixed in a ribbon blender to obtain mixed powder.

Then, a highly polar binder solution was prepared, specifically including: PVDF was dissolved in NMP.

Next, a cathode plate was prepared, specifically including: with a twin-screw device used, the first section fed the powder (namely, the prepared mixed powder), the second section injected the prepared highly polar binder solution, and the subsequent sections stirred and evenly mixed the mixture; and then, a thick film was extruded through a die and thinned to a designed thickness through rolling, edges of the film were cut with a cutter, and the film was transferred onto a surface of Al foil under pressure and dried to obtain a second cathode material layer.

Finally, a cathode active material (lithium iron phosphate or lithium nickel cobalt manganate NCM532, the same cathode active material as that used in the step of preparing dry powder), PVDF, and conductive carbon black SP were dispersed in an NMP solvent system, and the mixture was fully stirred and evenly mixed, and then applied onto the other surface of the Al foil through extrusion coating to obtain a first cathode material layer, followed by drying, cold pressing, and cutting, to obtain a cathode plate. The cathode plate included the second cathode material layer prepared by using the quasi-dry method and the first cathode material layer prepared by using the wet coating.

### Preparation of anode plate

1. Preparation of anode plate by using conventional wet coating
   An anode active material artificial graphite, a conductive agent acetylene black, styrene-butadiene copolymer (SBR), and sodium carboxymethyl cellulose (CMC) were fully stirred in deionized water to uniformity and then applied onto Cu foil, followed by drying, cold pressing, and cutting, to obtain an anode plate.
2. Preparation of anode plate by using quasi-dry method combined with conventional wet coating

First, dry powder was prepared, specifically including: an anode active material artificial graphite, a fibrillizable binder polytetrafluoroethylene (PTFE), and conductive carbon black SP were dry-mixed in a ribbon blender to obtain mixed powder.

Then, a high-strength self-adhesive binder solution was provided, namely, a polyacrylic resin aqueous solution with a viscosity of 50000 Pa.s.

Next, an anode plate was prepared, specifically including: with a twin-screw device used, the first section fed the powder (namely, the prepared mixed powder), the second section injected the adhesive solution (namely, the polyacrylic resin aqueous solution), the third section injected deionized water to adjust a solid content, and the subsequent sections stirred and evenly mixed the mixture; and then, a thick film was extruded through a die and thinned to a designed thickness through rolling, edges of the film were cut with a cutter, and the film was transferred onto a surface of Cu foil under pressure to obtain a second anode material layer.

Finally, an anode active material artificial graphite, a conductive agent acetylene black, styrene-butadiene copolymer (SBR), and sodium carboxymethyl cellulose (CMC) were fully stirred in deionized water to uniformity and then applied onto the other surface of the Cu foil to obtain a first anode material layer, followed by drying, cold pressing, and cutting, to obtain an anode plate. The anode plate included the second anode material layer prepared by using the quasi-dry method and the first anode material layer prepared by using the wet coating.

### Preparation of jelly roll

The cathode plate, the separator, and the anode plate were stacked in sequence so that the separator was located between the cathode and the anode for separation. Then, the resulting stack was wound to obtain a jelly roll through hot pressing, where an innermost corner R of the jelly roll formed a certain angle. The jelly roll was placed in an outer package, a prepared electrolyte was injected, and the outer package was sealed to obtain a battery. The electrolyte used ethylene carbonate and dimethyl carbonate as solvents and lithium hexafluorophosphate as a lithium salt. A polyethylene porous polymer film was used as a separator.

### Example 1

The angle of the innermost corner R of the jelly roll was 15°.

The cathode active material was lithium iron phosphate.

The cathode plate was prepared by using the quasi-dry method combined with the conventional wet coating.

The anode plate was prepared by using the conventional wet coating.

### Example 2

The angle of the innermost corner R of the jelly roll was 15°.

The cathode active material was lithium iron phosphate.

The cathode plate was prepared by using the conventional wet coating.

The anode plate was prepared by using the quasi-dry method combined with the conventional wet coating.

### Comparative Example 1

The angle of the innermost corner R of the jelly roll was 15°.

The cathode active material was lithium iron phosphate.

The cathode plate was prepared by using the conventional wet coating.

The anode plate was prepared by using the conventional wet coating.

### Example 3

The angle of the innermost corner R of the jelly roll was 15°.

The cathode active material was lithium nickel cobalt manganate NCM532.

The cathode plate was prepared by using the quasi-dry method combined with the conventional wet coating.

The anode plate was prepared by using the conventional wet coating.

### Example 4

The angle of the innermost corner R of the jelly roll was 15°.

The cathode active material was lithium nickel cobalt manganate NCM532.

The cathode plate was prepared by using the conventional wet coating.

The anode plate was prepared by using the quasi-dry method combined with the conventional wet coating.

### Example 5

The angle of the innermost corner R of the jelly roll was 15°.

The cathode active material was lithium nickel cobalt manganate NCM532.

The cathode plate was prepared by using the quasi-dry method combined with the conventional wet coating.

The anode plate was prepared by using the conventional wet coating.

### Example 6

The angle of the innermost corner R of the jelly roll was 15°.

The cathode active material was lithium nickel cobalt manganate NCM532.

The cathode plate was prepared by using the conventional wet coating.

The anode plate was prepared by using the quasi-dry method combined with the conventional wet coating.

### Comparative Example 2

The angle of the innermost corner R of the jelly roll was 15°.

The cathode active material was lithium nickel cobalt manganate NCM532.

The cathode plate was prepared by using the conventional wet coating.

The anode plate was prepared by using the conventional wet coating.

### Example 7

The angle of the innermost corner R of the jelly roll was 60°.

The cathode active material was lithium iron phosphate.

The cathode plate was prepared by using the quasi-dry method combined with the conventional wet coating.

The anode plate was prepared by using the conventional wet coating.

### Example 8

The angle of the innermost corner R of the jelly roll was 60°.

The cathode active material was lithium iron phosphate.

The cathode plate was prepared by using the conventional wet coating.

The anode plate was prepared by using the quasi-dry method combined with the conventional wet coating.

### Comparative Example 3

The angle of the innermost corner R of the jelly roll was 60°.

The cathode active material was lithium iron phosphate.

The cathode plate was prepared by using the conventional wet coating.

The anode plate was prepared by using the conventional wet coating.

The related parameters of the cathode plates, the anode plates, and the jelly rolls in Examples 1 to 8 and Comparative Examples 1 to 3 are shown in Table 1 below.

### Performance test method

Characterization of lithium precipitation on electrode plate:

The batteries after cycling at different rates were disassembled, and the morphology at the corners was observed to check for the presence of silver-white substances. The test results obtained in the examples and comparative examples are shown in Table 1 below.

| No. | Angle of corner R | Cathode active material | Preparation of electrode plate | | | | | | Rate | Precipitation? |
|---|---|---|---|---|---|---|---|---|---|---|
| | | | Second cathode material layer | First cathode material layer | Second anode material layer | First anode material layer | CB₁ | CB₂ | | |
| Comparative Example 1 | 15° | Lithium iron phosphate | Wet coating | Wet coating | Wet coating | Wet coating | 1:1.1 | 1:1.1 | 1C | No |
| | | | | | | | | | 1.5C | Yes |
| Example 1 | 15° | Lithium iron phosphate | Quasi-dry method | Wet coating | Wet coating | Wet coating | 1:1.07 | 1:1.1 | 1C | No |
| | | | | | | | | | 1.5C | No |
| | | | | | | | | | 2C | No |
| Example 2 | 15° | Lithium iron phosphate | Wet coating | Wet coating | Quasi-dry method | Wet coating | 1:1.06 | 1:1.08 | 1C | No |
| | | | | | | | | | 1.5C | No |
| | | | | | | | | | 2C | No |
| Comparative Example 2 | 15° | Lithium nickel cobalt manganate NCM532 | Wet coating | Wet coating | Wet coating | Wet coating | 1:1.4 | 1:1.4 | 1C | No |
| | | | | | | | | | 2C | Yes |
| Example 3 | 15° | Lithium nickel cobalt manganate NCM532 | Quasi-dry method | Wet coating | Wet coating | Wet coating | 1:1.07 | 1:1.09 | 1C | No |
| | | | | | | | | | 2C | No |
| | | | | | | | | | 3C | No |
| Example 4 | 15° | Lithium nickel cobalt manganate NCM532 | Wet coating | Wet coating | Quasi-dry method | Wet coating | 1:1.06 | 1:1.1 | 1C | No |
| | | | | | | | | | 2C | No |
| | | | | | | | | | 3C | No |
| Example 5 | 15° | Lithium nickel cobalt manganate NCM532 | Quasi-dry method | Wet coating | Wet coating | Wet coating | 1:1.15 | 1:1.25 | 1C | No |
| | | | | | | | | | 2C | No |
| | | | | | | | | | 3C | No |
| Example 6 | 15° | Lithium nickel cobalt manganate NCM532 | Wet coating | Wet coating | Quasi-dry method | Wet coating | 1:1.2 | 1:1.3 | 1C | No |
| | | | | | | | | | 2C | No |
| | | | | | | | | | 3C | No |
| Comparative Example 3 | 60° | Lithium iron phosphate | Wet coating | Wet coating | Wet coating | Wet coating | 1:1.1 | 1:1.1 | 1C | No |
| | | | | | | | | | 1.5C | No |
| | | | | | | | | | 2C | Yes |
| Example 7 | 60° | Lithium iron phosphate | Quasi-dry method | Wet coating | Wet coating | Wet coating | 1:1.04 | 1:1.06 | 1.5C | No |
| | | | | | | | | | 2C | No |
| | | | | | | | | | 3C | No |
| | | | | | | | | | 4C | No |
| Example 8 | 60° | Lithium iron phosphate | Wet coating | Wet coating | Quasi-dry method | Wet coating | 1:1.03 | 1:1.07 | 1.5C | No |
| | | | | | | | | | 2C | No |
| | | | | | | | | | 3C | No |
| | | | | | | | | | 4C | No |

It can be learned from the comparison between Examples 1 and 2 and Comparative Example 1 that the lithium iron phosphate battery of this application does not exhibit lithium precipitation, even at a high rate of 2C; whereas, the lithium iron phosphate battery in Comparative Example 1 exhibits lithium precipitation at a rate of 1.5C. In addition, as compared with the lithium iron phosphate battery in Comparative Example 1, CB₁ and CB₂ of the lithium iron phosphate battery of this application are both smaller, resulting in less energy density waste, thereby increasing the energy density of the battery.

It can be learned from the comparison between Examples 3 to 6 and Comparative Example 2 that the lithium nickel cobalt manganate NCM532 battery of this application does not exhibit lithium precipitation, even at a high rate of 3C; whereas, the lithium iron phosphate battery in Comparative Example 2 exhibits lithium precipitation at a rate of 2C. In addition, as compared with the lithium iron phosphate battery in Comparative Example 2, CB₁ and CB₂ of the lithium nickel cobalt manganate NCM532 battery of this application are both smaller, resulting in less energy density waste, thereby increasing the energy density of the battery.

It can be learned from the comparison between Examples 7 and 8 and Comparative Example 3 that the lithium iron phosphate battery of this application does not exhibit lithium precipitation, even at a high rate of 4C; whereas, the lithium iron phosphate battery in Comparative Example 3 exhibits lithium precipitation at a rate of 2C. In addition, as compared with the lithium iron phosphate battery in Comparative Example 3, CB₁ and CB₂ of the lithium iron phosphate battery of this application are both smaller, resulting in less energy density waste, thereby increasing the energy density of the battery.

It can be learned from the comparison between Examples 1 and 7 that a larger angle of the innermost corner R of the jelly roll means smaller CB₁ and CB₂ accordingly, further reducing the energy density waste, thereby increasing the energy density of the battery.

The foregoing descriptions are merely specific preferred embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. An electrode plate structure, **characterized by** comprising a cathode plate and an anode plate, the cathode plate and the anode plate being wound to form part of a jelly roll; wherein
the cathode plate comprises: a first cathode material layer closer to a central position of the jelly roll; and a second cathode material layer farther away from the central position of the jelly roll; and
the anode plate comprises: a first anode material layer closer to the central position of the jelly roll; and a second anode material layer farther away from the central position of the jelly roll;
wherein the second cathode material layer and the first anode material layer are disposed opposite each other, and the first cathode material layer and the first anode material layer are disposed opposite each other;
a ratio CB₁ of a surface loading of the second cathode material layer to a surface loading of the first anode material layer is 1:(1.01-1.3); and
a ratio CB₂ of a surface loading of the first cathode material layer to a surface loading of the second anode material layer is 1:(1.03-1.4), wherein CB₂ is different from CB₁.

2. The electrode plate structure according to claim 1, **characterized in that** CB₁ is greater than CB₂.

3. The electrode plate structure according to claim 1 or 2, **characterized in that** CB₁ is 1:(1.03-1.2), and CB₂ is 1:(1.05-1.3).

4. The electrode plate structure according to claim 3, **characterized in that** CB₁ is 1:(1.03-1.07), and CB₂ is 1:(1.06-1.1).

5. The electrode plate structure according to claim 1 or 2, **characterized in that** both CB₁ and CB₂ increase with the increase of an innermost corner R of the jelly roll.

6. The electrode plate structure according to claim 1 or 2, **characterized in that** an angle range of an innermost corner R of the jelly roll is 5°-45°, CB₁ is 1:(1.06-1.3), and CB₂ is 1:(1.08-1.4).

7. The electrode plate structure according to claim 6, **characterized in that** CB₁ is 1:(1.06-1.2), and CB₂ is 1:(1.08-1.3).

8. The electrode plate structure according to claim 1 or 2, **characterized in that** an angle range of an innermost corner R of the jelly roll is 45°-90°, CB₁ is 1:(1.01-1.06), and CB₂ is 1:(1.03-1.08).

9. The electrode plate structure according to claim 8, **characterized in that** CB₁ is 1:(1.03-1.04), and CB₂ is 1:(1.06-1.07).

10. The electrode plate structure according to claim 1 or 2, **characterized in that** the surface loading of the first cathode material layer is lower than the surface loading of the second cathode material layer, and/or the surface loading of the first anode material layer is lower than the surface loading of the second anode material layer.

11. The electrode plate structure according to claim 10, **characterized in that** the surface loading of the first cathode material layer is lower than the surface loading of the second cathode material layer, and the surface loading of the first anode material layer is equal to the surface loading of the second anode material layer;
or the surface loading of the first cathode material layer is equal to the surface loading of the second cathode material layer, and the surface loading of the first anode material layer is lower than the surface loading of the second anode material layer.

12. A preparation method of electrode plate structure, **characterized in that**
a first cathode material layer and a second cathode material layer have different preparation methods; and/or
a first anode material layer and a second anode material layer have different preparation methods.

13. The preparation method according to claim 12, **characterized in that** the second cathode material layer is prepared by using a quasi-dry method, and the first cathode material layer is prepared by using a wet method.

14. The preparation method according to claim 13, **characterized in that** when the second cathode material layer is prepared by using the quasi-dry method, a binder used is a mixture of a fibrillizable binder and a soluble highly polar binder.

15. The preparation method according to claim 13 or 14, **characterized in that** when the second cathode material layer is prepared by using the quasi-dry method, a solid content of an agglomerated material is 65%-98%.

16. The preparation method according to claim 12, **characterized in that** the second anode material layer is prepared by using a quasi-dry method, and the first anode material layer is prepared by using a wet method.

17. The preparation method according to claim 16, **characterized in that** when the second anode material layer is prepared by using the quasi-dry method, a binder used is a mixture of a fibrillizable binder and a self-adhesive binder.

18. The preparation method according to claim 16 or 17, **characterized in that** when the second anode material layer is prepared by using the quasi-dry method, a solid content of an agglomerated material is 63%-97%.

19. A battery cell, **characterized by** comprising the electrode plate structure according to any one of claims 1 to 11.

20. A secondary battery, **characterized by** comprising the battery cell according to claim 19.
